# EUROPEAN PATENT APPLICATION

(11) **EP 1 168 758 A2**
(43) Date of publication of application: **02.01.2002**
(21) Application number: 01114838.4
(22) Date of filing: 28.06.2001
(51) Int. Cl.: H04L 29/06

(54) **Client/server system and program for application distribution**

(30) Priority: 29.06.2000 JP 2000196865
(71) Applicant: KABUSHIKI KAISHA TOSHIBA, Kawasaki-shi, Kanagawa-ken 210-8572 (JP)
(72) Inventor: Honda, Makoto, Minato-ku, Tokyo 105-8001 (JP)
(74) Representative: HOFFMANN - EITLE

(57) **Abstract**

A system which uses a server (S1) to distribute an application to a client. The server (S1) includes an application storage section (HD1), an application request acceptance section (FR1), an application generation section (FL1), and an application transmission section (FS1). The application storage section (HD1) has a link information table storing link information for linking a module group as an executable object for each platform. The application request acceptance section (FR1) accepts a request to download an application from the client. The application generation section (FL1) references a link information table according to a platform type included in the download request and generates an executable object for the application. The application transmission section (FS1) transmits the executable object to the client.

## Description

The present invention relates to a server/client system and a program for implementing application distribution in this server/client system.

For example, applications used for mobile terminals and portable telephones are stored in a ROM of the product prior to shipment. Most of these applications cannot be rewritten or added to. As the data communication infrastructure develops, however, there have become available a mobile terminal and a portable telephone which contain a browser and mail applications for providing a capability of data communication as a stand-alone terminal. Further, it is expected that the mobile terminal or portable telephone be used like a networked PC in such a way that an application is executed by downloading it from the network. Unlike PC platforms, however, there are varieties of platforms for mobile terminals and portable telephones. There is a problem that an application's executable objects need to be provided for respective platforms independently.

As a technology for solving this problem, particular attention is paid to a simple virtual computer environment oriented to mobile terminals and portable telephones. The most typical virtual computer environment is Java. The application execution environment for Java signifies executing a platform-independent executable object called a bytecode in the virtual computer environment called Java VM (virtual machine) developed for a specific platform. A bytecode is generated by compiling a source code in Java. When platforms are provided with Java VMs which execute the bytecode, it is possible to provide an environment in which any platform can execute the same application written in Java. For example, Jpn. Pat. Appln. KOKAI Publication No. 11-187470 discloses such an environment.

In the case of mobile terminals and portable telephones, platform functions for operating virtual computers depend on communication agencies and terminal manufacturers. For this reason, it is not possible to fully standardize application interfaces (including a communication capability and device functions such as a keyboard and a display) characteristic of the virtual computer environment. As a result, there arises a problem of distributing different executable objects in the virtual computer environment for mobile terminals and portable telephones according to communication agencies and terminal manufacturers. There is a possibility of not making the most of virtual computer features.

A possible solution for this problem is to generate an executable object including all necessary components and processing so that an application can execute in virtual computer environments for different platforms. On the contrary, however, this causes a problem of increasing the executable object size.

Compared to a LAN or dedicated line connection, the communication environment for mobile terminals and portable telephones provides a lower bandwidth for data communication and a smaller memory area for storing applications. Accordingly, the size of an object to be downloaded needs to be small. Although some effects can be expected by compressing an object during downloading or by optimizing the object size, the CPU throughput may not be sufficiently allocated to the processing.

Generally, download-based applications used for portable telephones are highly entertainment-oriented and are characterized by relatively short life cycles. Such an application may require an execution restriction capability for limiting the period or the number of times for using the application. On PCs, there are generally adopted execution restriction methods. For example, a time limit for using the application is embedded in the application.
Further, an OS-provided application parameter storage area stores the number of executions or the time limit of the application. Associated data is referenced and updated each time the application is executed.

In portable telephones, however, communication agencies and terminal manufacturers employ different interface specifications for the application parameter storage area. There may be the case where the memory area is not allocated sufficiently. Accordingly, the execution restriction capability for portable telephones needs to be available independently of platforms for the communication agencies and terminal manufacturers.

As mentioned above with respect to the prior art, mobile terminals and portable telephones are provided with virtual computer environments whose application interfaces partially differ depending on communication agencies and terminal manufacturers. There has been a problem of providing each platform with a specific executable object or distributing a large-size executable object containing functions oriented to different platforms.

It is therefore an object of the present invention to provide a server/client system capable of distributing applications to terminals without increasing the object size and to provide a program for implementing the application distribution in this server/client system.

To attain the aforementioned object, a system according to a first aspect of the present invention, using a server to distribute an application to a client via a network, wherein a client transmits to the server a request to download an application including a platform type for the client and stores the application transmitted from the server in an application storage area;
the server comprising:
an application storage section comprising a prepared module group and a link information table storing link information for linking these modules as executable objects for respective platforms;
a download request acceptance section configured to accept a request to download the application from the client;
an application generation section configured to determine the platform type included in a download request accepted by the download request acceptance section, reference the link information table, and generate an executable object for the application; and
an application transmission section configured to transmit the executable object generated by the application generation section to the client.

A system according to a second aspect of the present invention, using a server to distribute an application to a client via a network wherein a client transmits to the server a request to download an application and stores the application transmitted from the server in an application storage area;
the server comprising:
an application storage section comprising a prepared module group and a link information table storing link information for linking these modules as executable objects for respective platforms;
a download request acceptance section configured to accept a request to download the application from the client;
an application generation section configured to determine a type of the platform based on a network address of the client, reference the link information table, and generate an executable object for the application; and
an application transmission section configured to transmit the executable object generated by the application generation section to the client.

A system according to a third aspect of the present invention, using a server to distribute an application to a client via a network, wherein the client transmits to the server a request to download an application via a relay server and stores the application transmitted from the server in an application storage area;
the server comprising:
an application storage section comprising a prepared module group and a link information table storing link information for linking these modules as executable objects for respective platforms;
a download request acceptance section configured to accept a request to download the application from the client;
an application generation section configured to determine a type of the platform based on a network address of the relay server, reference the link information table, and generate an executable object for the application; and
an application transmission section configured to transmit the executable object generated by the application generation section to the client.

A system according to a fourth aspect of the present invention, using a server to distribute an application to a client via a network, wherein the client transmits to the server a request to download an application and stores the application transmitted from the server in an application storage area;
the server comprising:
an application storage section comprising a prepared module group and a link information table storing link information for linking these modules as executable objects for respective platforms;
a download request acceptance section having a plurality of port addresses configured to accept a request to download the application from the client;
an application generation section configured to determine a type of the platform based on a port address having accepted the download request reference the link information table and generate an executable object for the application; and
an application transmission section configured to transmit the executable object generated by the application generation section to the client.

A system according to a fifth aspect of the present invention, using a server to distribute an application to a client via a network wherein the client transmits to the server a request to download an application including a platform type for the client and stores the application transmitted from the server in an application storage area and the application comprises a first module group executed on the client and a second module group executed on the server in place of the client;
the server comprising:
an application storage section comprising the first and second module groups and a link information table storing link information configured to link these modules as executable objects for respective platforms;
a download request acceptance section configured to accept a request to download an application from the client;
an application generation section configured to determine the platform type included in a download request accepted by the download request acceptance section, reference the link information table and generate an executable object for the application;
an application transmission section configured to transmit the executable object generated by the application generation section to the client; and
a substitutive execution section configured to accept a processing request from the second module group executed on the server in place of the client during execution of an application on the client and transmit a substitutive execution result to the client.

A system according to a sixth aspect of the present invention, using a server to distribute an application to a client via a network wherein the client transmits to the server a request to download an application and stores the application transmitted from the server in an application storage area and the application comprises a first module group executed on the client and a second module group executed on the server in place of the client;
the server comprising:
an application storage section comprising the first and second module groups and a link information table storing link information for linking these modules as executable objects for respective platforms;
a download request acceptance section configured to accept a request to download an application from the client;
an application generation section configured to determine a type of the platform based on a network address of the client, reference the link information table, and generate an executable object for the application;
an application transmission section configured to transmit the executable object generated by the application generation section to the client; and
a substitutive execution section configured to accept a processing request from the second module group executed on the server in place of the client during execution of an application on the client and sending a substitutive execution result to the client.

A system according to a seventh aspect of the present invention, using a server to distribute an application to a client via a network wherein the client transmits to the server a request to download an application via a relay server and stores the application transmitted from the server in an application storage area and the application comprises a first module group executed on the client and a second module group executed on the server in place of the client;
the server comprising:
an application storage section comprising the first and second module groups and a link information table storing link information for linking these modules as executable objects for respective platforms;
a download request acceptance section configured to accept a request to download an application from the client;
an application generation section configured to determine a type of the platform based on a network address of the relay server, referencing the link information table, and generating an executable object for the application;
an application transmission section configured to transmit the executable object generated by the application generation section to the client; and
a substitutive execution section configured to accept a processing request from the second module group executed on the server in place of the client during execution of an application on the client and transmit a substitutive execution result to the client.

A system according to an eighth aspect of the present invention, using a server to distribute an application to a client via a network wherein the client transmits to the server a request to download an application and stores the application transmitted from the server in an application storage area the application comprises a first module group executed on the client and a second module group executed on the server in place of the client;
the server comprising:
an application storage section comprising the first and second module groups and a link information table storing link information for linking these modules as executable objects for respective platforms;
a download request acceptance section having a plurality of port addresses configured to accept a request to download an application from the client;
an application generation section configured to determine a type of the platform based on a port address having accepted the download request, reference the link information table and generate an executable object for the application;
an application transmission section configured to transmit the executable object generated by the application generation section to the client; and
a substitutive execution section configured to accept a processing request from the second module group executed on the server in place of the client during execution of an application on the client and transmit a substitutive execution result to the client.

A system according to a ninth aspect of the present invention, using a server to distribute an application to a client via a network wherein the client transmits to the server a download request including a function request of the application and stores the application transmitted from the server in an application storage area the application comprises a module group including modules having the same module interface and different functions;
the server comprising:
an application storage section comprising the module group and a link information table for linking these modules as executable objects compliant with an application function request from the client;
a download request acceptance section configured to accept a request to download the application from the client;
an application generation section configured to determine the application function request included in a download request accepted by the download request acceptance section, reference the link information table and generate an executable object for the application;
an application transmission section configured to transmit the executable object generated by the application generation section to a client.

A program according to a tenth aspect of the present invention for a computer to implement a function by which a client transmits to a server a request to download an application including a platform type for the client via a network and stores the application transmitted from the server in an application storage area, the function including:
a download request acceptance function configured to accept a request to download the application from the client;
an application generation function configured to determine the platform type included in an accepted download request, reference a link information table storing link information for linking a prepared module group as an executable object for each platform, and generate an executable object for the application; and
an application transmission function configured to transmit the generated executable object to the client.

A program according to an eleventh aspect of the present invention for a computer to implement a function by which a client transmits to a server a request to download an application via a network and stores the application transmitted from the server in an application storage area, the function including:
a download request acceptance function configured to accept a request to download the application from the client;
an application generation function configured to determine a type of the platform based on a network address of the client, reference a link information table storing link information for linking a prepared module group as an executable object for each platform, and generate an executable object for the application; and
an application transmission function configured to transmit the generated executable object to the client.

A program according to a twelfth aspect of the present invention for a computer to implement a function by which a client transmits to a server a request to download an application via a relay server and stores the application transmitted from the server in an application storage area, the function including:
a download request acceptance function configured to accept a request to download the application from the client;
an application generation function configured to determine a type of the platform based on a network address of the relay server, reference a link information table storing link information for linking a prepared module group as an executable object for each platform, and generate an executable object for the application; and
an application transmission function configured to transmit a generated executable object to the client.

A program according to a thirteenth aspect of the present invention for a computer to implement a function by which a client transmits to a server a request to download an application via a network and stores the application transmitted from the server in an application storage area, the function including:
a download request acceptance function configured to accept a request to download the application from the client;
an application generation function configured to determine a type of the platform based on a port address having accepted the download request, reference a link information table storing link information for linking a prepared module group as an executable object for each platform, and generate an executable object for the application; and
an application transmission function configured to transmit the generated executable object to the client.

A program according to a fourteenth aspect of the present invention for a computer to implement a function by which a client transmits to a server a request to download an application including a platform type for the client and stores the application transmitted from the server in an application storage area, wherein
the application comprises a first module group executed on the client and a second module group executed on the server in place of the client; and
the function including:
   a download request acceptance function configured to accept a request to download an application from the client;
   an application generation function configured to determine the platform type included in an accepted download request, reference a link information table storing link information for linking the first and second module groups as executable objects for each platform, and generate an executable object for the application;
   an application transmission function configured to transmit the generated executable object to the client; and
   a substitutive execution function configured to accept a processing request from the second module group executed on the server in place of the client during execution of an application on the client and transmit a substitutive execution result to the client.

A program according to a fifteenth aspect of the present invention for a computer to implement a function by which a client transmits to a server a request to download an application and stores the application transmitted from the server in an application storage area, wherein
the application comprises a first module group executed on the client and a second module group executed on the server in place of the client; and
the function including:
   a download request acceptance function configured to accept a request to download an application from the client;
   an application generation function configured to determine a type of the platform based on a network address of the client, reference a link information table storing link information for linking the first and second module groups as executable objects for each platform, and generate an executable object for the application;
   an application transmission function configured to transmit the generated executable object to the client; and
   a substitutive execution function configured to accept a processing request from the second module group executed on the server in place of the client during execution of an application on the client and transmit a substitutive execution result to the client.

A program according to a sixteenth aspect of the present invention for a computer to implement a function by which a client transmits to a server a request to download an application via a relay server and stores the application transmitted from the server in an application storage area, wherein
the application comprises a first module group executed on the client and a second module group executed on the server in place of the client; and
the function including:
   a download request acceptance function configured to accept a request to download an application from the client;
   an application generation function configured to determine a type of the platform based on a network address of the relay server, reference a link information table storing link information for linking the first and second module groups as executable objects for each platform, and generate an executable object for the application;
   an application transmission function configured to transmit the generated executable object to the client; and
   a substitutive execution function configured to accept a processing request from the second module group executed on the server in place of the client during execution of an application on the client and transmit a substitutive execution result to the client.

A program according to a seventeenth aspect of the present invention for a computer to implement a function by which a client transmits to a server a request to download an application and stores the application transmitted from the server in an application storage area, wherein
the application comprises a first module group executed on the client and a second module group executed on the server in place of the client; and
the function including:
   a download request acceptance function configured to accept a request to download an application from the client by using a plurality of port addresses;
   an application generation function configured to determine a type of the platform based on a port address having accepted the download request, reference a link information table storing link information for linking the first and second module groups as executable objects for each platform, and generate an executable object for the application;
   an application transmission function configured to transmit the generated executable object to the client; and
   a substitutive execution function configured to accept a processing request from the second module group executed on the server in place of the client during execution of an application on the client and transmit a substitutive execution result to the client.

A program according to an eighteenth aspect of the present invention for a computer to implement a function by which a client transmits to a server a download request including a function request of the application via a network and stores an application sent from the server in an application storage area, wherein
the application comprises a module group including modules having the same module interface and different functions; and
the function comprising:
   a download request acceptance function configured to accept a request to download the application from the client;
   an application generation function configured to determine an application function request included in an accepted download request, reference the link information table, and generate an executable object for the application; and
   an application transmission function configured to transmit the generated executable object to a client.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows a configuration of a server/client system according to a first embodiment of the present invention;
FIG. 2 shows a configuration of an application download server S1 in FIG. 1;
FIG. 3 shows states of an application link information table LTA1 and an application class storage section CLA1 when an application "A" is stored in an application storage section HD1;
FIG. 4 shows a configuration of an executable object OA1 generated in the first embodiment;
FIG. 5 shows a configuration of an executable object OA2 generated in the first embodiment;
FIG. 6 shows a configuration of a server/client system according to a second embodiment of the present invention;
FIG. 7 shows states of an application storage section HD1 corresponding to the second embodiment of the present invention;
FIG. 8 shows a configuration of an application execution management server M1;
FIG. 9 shows a configuration of an executable object OB1 generated in the second embodiment; and
FIG. 10 shows a configuration of an executable object OB2 generated in the second embodiment.

Embodiments of the present invention will be described in further detail with reference to the accompanying drawings.

### (First Embodiment)

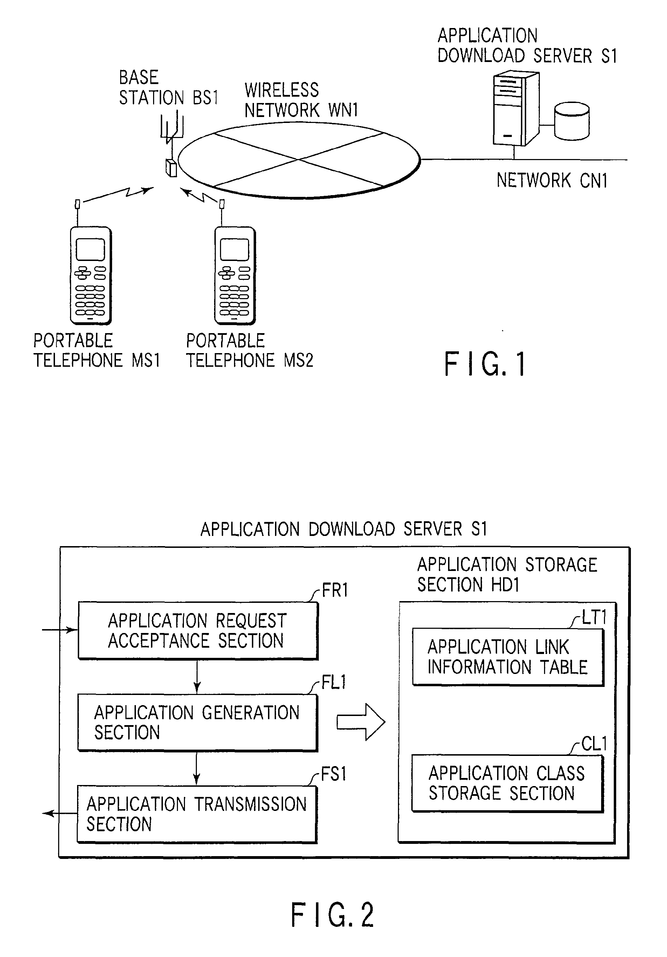

FIG. 1 shows a configuration of a server/client system according to a first embodiment of the present invention. The system comprises portable telephones MS1 and MS2, a base station BS1, a wireless network WN1, a network CN1 such as a communication agency network or Internet, and an application download server S1 connected to the network CN1.

The portable telephones MS1 and MS2 work as clients and are provided with the virtual computer environment such as Java VM. These portable telephones can download an executable object for the virtual computer from the application download server S1, via the base station BS1 and the wireless network WN1, and execute the downloaded executable object in the terminal. The portable telephone MS1 is capable of color display. The portable telephone MS2 is designed for monochrome display, not capable of color display. This embodiment distributes a same application "A" to these two types of portable telephones according to a method to be described later.

FIG. 2 shows a configuration of the application download server S1 in FIG. 1. The server comprises an application request acceptance section FR1, an application generation section FL1, an application transmission section FS1, and an application storage section HD1. Further, the application storage section HD1 comprises an application link information table LT1 and an application class storage section CL1.

The application "A" described in this embodiment becomes an executable object by linking three classes CA, CB, and CC. Of these three classes, class CC is responsible for the application's display function. More specifically, there are provided class CC1 for color display terminals and class CC2 for monochrome display terminals. When an application is generated, class CC1 or CC2 is linked to executable object as class CC.

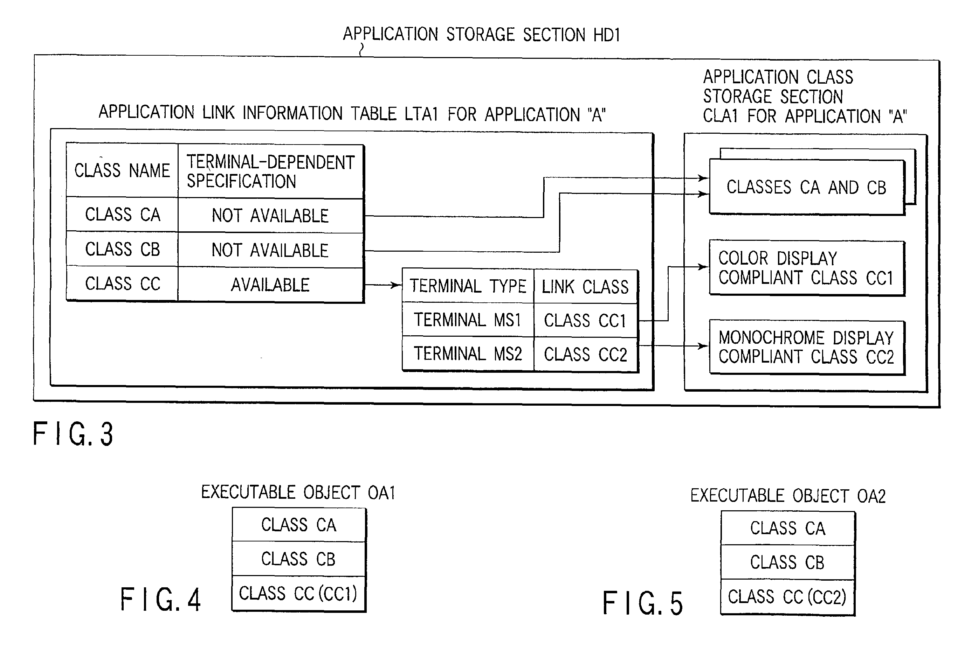

FIG. 3 shows states of the application link information table LTA1 and the application class storage section CLA1 when the application "A" is stored in the application storage section HD1. The application link information table LTA1 includes a class constituting the application, a table describing terminal-dependent information for that class, and a table describing which class is to be linked for each terminal type with respect to a terminal-dependent class. The application class storage section CLA1 stores a class group to be linked. This embodiment uses the class group as one of the module groups but is not limited thereto. It may be preferable to use a function group in the C language.

The following describes a flow of processing in which the application "A" is downloaded to the portable telephone MS1 based on the thus configured application storage section HD1.
1. The portable telephone MS1 issues a request for downloading the application "A" to the application download server S1. At this time, the download request is provided with terminal type information (MS1) as one part of platform type information. The platform type information further includes agency names and the like.
2. The application request acceptance section FR1 accepts the request for downloading the application "A" from the portable telephone MS1 and issues a request for generating the terminal type information MS1 and the application "A" to the application generation section FL1.
3. The application generation section FL1 references the application link information table LTA1 in the application storage section HD1. The application generation section FL1 then links classes CA, CB, and CC1 to generate an executable object OA1. At this time, class CC1 corresponds to class CC executable on the portable telephone MS1 for color display. The executable object OA1 is passed to the application transmission section FS1.
4. The application transmission section FS1 sends the executable object OA1 to the portable telephone MS1.

Also for the portable telephone MS2, classes CA, CB, and CC2 are linked for sending an executable object OA2 in the same manner as mentioned above. FIGS. 4 and 5 show configurations of the executable objects OA1 and OA2 generated in this embodiment, respectively.

According to the conventional technique, executable objects are generated for portable telephones MS1 and MS2 in advance and are selected when the application is downloaded. Alternatively, an application including both classes CC1 and CC2 is distributed. At execution time, the terminal determines the terminal type and calls an appropriate class. The method according to this embodiment eliminates the need for generating an executable object in advance and decreases the size of the executable object to be downloaded, making it possible to improve the download efficiency.

Generally in the case of portable telephones, communication agencies individually specify user interface specifications as terminal specifications. Accordingly, the user interface for the virtual computer environment may also depend on communication agencies. In this case, an application download server on the Internet can use the application download system according to the following method.

For example, it is assumed that communication agency types can be identified by network addresses for the portable telephones MS1 and MS2 or by a network address of a relay server installed between the portable telephone MS1 or MS2 and the application download server S1. The corresponding network address is used for determining the terminal type and referencing the application link information table LT1. In this case, the terminal type information in the application link information table LT1 is replaced by a communication agency type. Alternatively, type information about the communication agency is added to the terminal type information for use.

It may be preferable to use yet another method. Namely, the download request acceptance section FR1 uses a plurality of port addresses to accept a download request from the portable telephone MS1. The application generation section FL1 determines the terminal type based on the port address for accepting the relevant download request.

### (Second Embodiment)

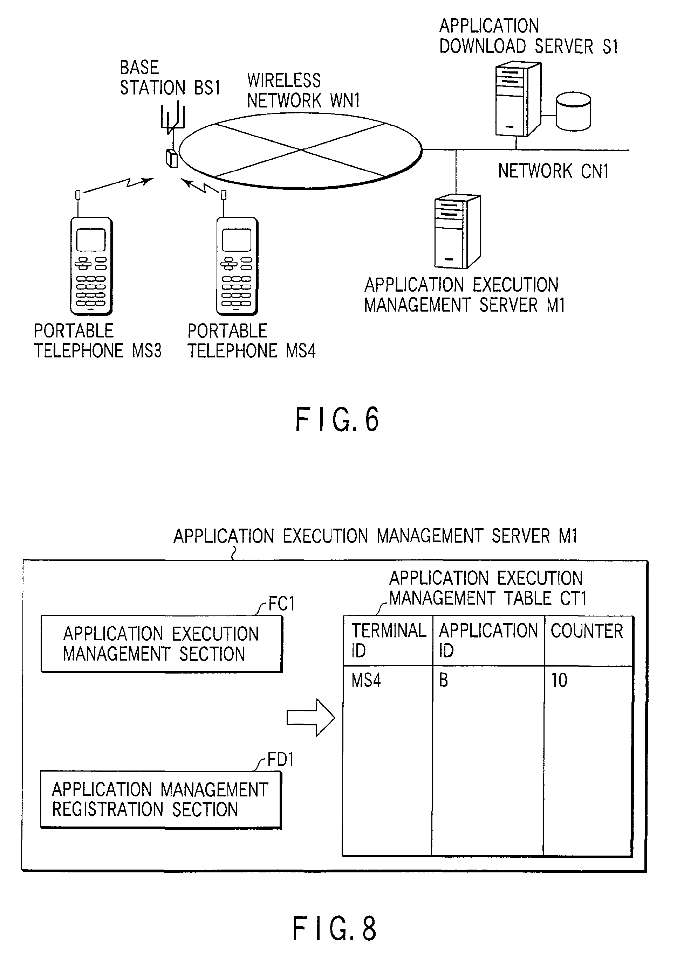

FIG. 6 shows a configuration of a server/client system according to the second embodiment of the present invention. The system comprises portable telephones MS3 and MS4, a base station BS1, a wireless network WN1, a network CN1 such as a communication agency network or the Internet, an application download server S1 and an application execution management server M1 connected to the network CN1. The portable telephones MS3 and MS4 are provided with the virtual computer environment. Via the base station BS1 and the wireless network WN1, these portable telephones can download an executable object for the virtual computer from the application download server S1 via the base station BS1 and wireless network WN1, and execute the downloaded executable object in the terminals.

It is assumed that execution restrictions such as an execution time limit and the number of executions are given to an application "B" to be downloaded and used for portable telephones in this embodiment. It is also assumed that a user of the portable telephone MS3 wants to use the application "B" by specifying the execution time limit. When the time limit expires, the application becomes unavailable. By contrast, a user of the portable telephone MS4 wants to use the application "B" by specifying the number of executions.

The application "B" becomes an executable object by linking three classes CD, CE, and CF. Of these three classes, class CF is responsible for the application's execution control function. More specifically, there are provided class CF1 for enabling the execution restriction based on the time limit and class CF2 for enabling the execution restriction based on the number of executions. When an application is generated, class CF1 or CF2 is linked to class CF according to a user's request for the function.

Class CF1 is executed independently in the terminal. Class CF2 manages the number of executions by inquiring of the application execution management server M1 to be described later.

FIG. 7 shows states of the application storage section HD1 corresponding to the second embodiment of the present invention. The basic configuration is the same as that for the first embodiment. The application storage section HD1 here configures a link information table according to function types.

As shown in FIG. 8, the application execution management server M1 comprises an application execution management section FC1, an application management registration section FD1, and an application execution management table CT1. When downloading the application, the server decrements a counter specified for each application in response to a request from class CF2 during application execution.

The following describes a flow of processing in which the application "B" is downloaded to the portable telephone MS3 based on the above-mentioned configuration.
1. The portable telephone MS3 issues a request for downloading the application "B" to the application download server S1. At this time, the request is provided with the time limit specification information as the application's function information.
2. The application request acceptance section FR1 accepts the request for downloading the application "B" from the portable telephone MS3 and issues a request for generating the application "B" with the time limit specified to the application generation section FL1.
3. The application generation section FL1 references the application link information table LTB1 in the application storage section HD1. The application generation section FL1 then links classes CD, CE, and CF1 to generate an executable object OB1. At this time, class CF1 corresponds to class CF for applying the execution restriction with the time limit specified. The executable object OB1 is passed to the application transmission section FS1.
4. The application transmission section FS1 sends the executable object OB1 to the portable telephone MS3.

The following describes a flow of processing in which the application "B" is downloaded to the portable telephone MS4.
1. The portable telephone MS3 issues a request for downloading the application "B" to the application download server S1. At this time, the download request is provided with the count specifying information as the application's function information.
2. The application request acceptance section FR1 accepts the request for downloading the application "B" from the portable telephone MS4 and issues a request for generating the application "B" with 7 times specified to the application generation section FL1.
3. The application generation section FL1 references the application link information table LTB1 in the application storage section HD1. The application generation section FL1 then links classes CD, CE, and CF2 to generate an executable object OB2. At this time, class CF2 corresponds to class CF for applying the execution restriction with the number of times specified. The executable object OB2 is passed to the application transmission section FS1.
4. The application transmission section FS1 sends the executable object OB2 to the portable telephone MS4. It also sends the terminal ID, the application ID, and an initial value for the number of executions to the application management registration section FD1 on the application execution management server M1.
5. The application management registration section FD1 stores the terminal ID, the application ID, and the initial value for the number of executions in the application execution management table CT1.

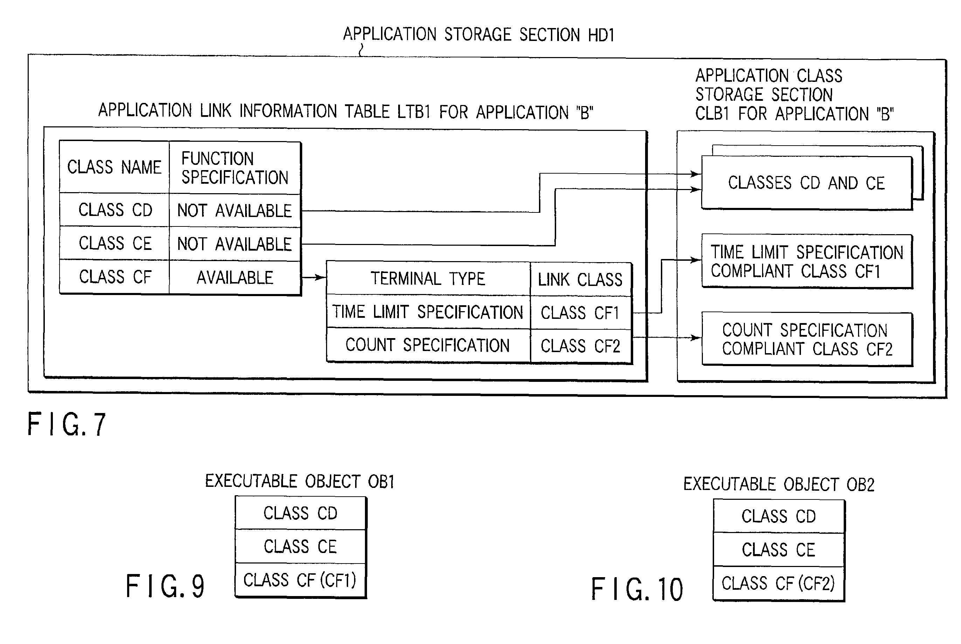

FIGS. 9 and 10 show configurations of the executable objects OB1 and OB2 generated in this embodiment, respectively.

The terminal ID and the application ID registered here are information for specifying an application executed by the user. This information can be any ID for other purposes. For example, the terminal ID can be a telephone number or a user ID. The application ID can be an application name or a number unique to the site.

According to the above-mentioned processing, the portable telephone MS4 downloads the application "B" which restricts the number of executions. The following describes operations when this application is executed.
1. The portable telephone MS4 stores the application "B". The application's class CF issues a decrement request as well as the terminal ID and the application ID to the application execution management section FC1 on the application execution management server M1.
2. When detecting an entry for the application "B" on the MS4, the application execution management section FC1 decrements the counter and returns a response indicating that the execution is possible. When no entry is detected, the application execution management section FC1 returns a response indicating that the execution is impossible. When an entry is available and the decrement results in 0, the application execution management section FC1 removes the entry for the application "B" on the MS4 from the application execution management table CT1.
3. When the application execution management section FC1 returns a response indicating that the execution is possible, the portable telephone MS4 continues executing the application. When the application execution management section FC1 returns a response indicating that the execution is impossible, the portable telephone MS4 terminates the application.

The above-mentioned embodiment describes how the present invention is applied when an application is provided with execution restrictions. This embodiment is also effective when an application with the charging function is distributed from a download server on the Internet. Generally, the charging portion depends on communication agencies. Especially, a server responsible for charging is installed in the communication agency network. In this case, the application download server specifies a communication agency according to the type or network address of the portable telephone which issued a download request. The application download server then distributes an application which links classes for the charging section in each communication agency to the portable telephone.

As mentioned above, this embodiment links and generates an application corresponding to a function request from the user during a download operation. Consequently, it is possible to provide highly maintainable application distribution without increasing the executable object size for the application.

This embodiment of the present invention generates and sends an executable object which links only an appropriate module to the client having different application interfaces when a download request occurs. The embodiment eliminates the need for generating an executable object to be distributed for respective client types and decreases the object size, effectively downloading and storing an application in the client.

According to another embodiment of the present invention, the server can determine the platform type based on an address of the origin for sending a request to download an application, and then generate and send the application. This address can be a network address for the client or the relay server. Even if the client cannot send a platform type to the server, it is possible to effectively download and store an application in the client.

According to still another embodiment of the present invention, the server can determine the platform type based on a port address of the destination for sending a request to download an application, and then generate and send the application. Even if the client cannot send a terminal type to the server, it is possible to effectively download and store an application in the client.

When the client provides low throughput, yet another embodiment of the present invention can generate and distribute an application which allows the server to execute a relevant module. It is possible to provide impartial services to client users with different throughputs.

According to still yet another embodiment of the present invention, the server can specify a substitutive execution module based on an address of the origin for sending a request to download an application. It is possible to generate and send an object which allows different servers to be substitutively executed for clients and platforms.

According to yet still another embodiment of the present invention, the server can specify a substitutive execution module based on a port address of the destination for sending a request to download an application. It is possible to generate and send an object which allows different servers to be substitutively executed for clients and platforms.

Finally, still yet another embodiment of the present invention can accept an application function request from the user and download an executable object comprising a module replaced by that function. This eliminates the need for generating a plurality of executable objects in advance and decreases the object size, effectively downloading and storing an application in the client.

## Claims

1. A system using a server (S1) to distribute an application to a client (MS1) via a network, **characterized in that** a client (MS1) transmits to said server (S1) a request to download an application including a platform type for said client (MS1) and stores said application transmitted from said server (S1) in an application storage area;
said server (S1) comprising:
an application storage section (HD1) comprising a prepared module group and a link information table storing link information for linking these modules as executable objects for respective platforms;
a download request acceptance section (FR1) configured to accept a request to download said application from said client (MS1);
an application generation section (FL1) configured to determine said platform type included in a download request accepted by said download request acceptance section (FR1), reference said link information table, and generate an executable object for said application; and
an application transmission section (FS1) configured to transmit the executable object generated by said application generation section (FL1) to said client (MS1).

2. A system using a server (S1) to distribute an application to a client (MS1) via a network **characterized in that** a client (MS1) transmits to said server (S1) a request to download an application and stores said application transmitted from said server (S1) in an application storage area;
said server (S1) comprising:
an application storage section (HD1) comprising a prepared module group and a link information table storing link information for linking these modules as executable objects for respective platforms;
a download request acceptance section (FR1) configured to accept a request to download said application from said client (MS1);
an application generation section (FL1) configured to determine a type of the platform based on a network address of said client (MS1), reference said link information table, and generate an executable object for said application; and
an application transmission section (FS1) configured to transmit the executable object generated by said application generation section (FL1) to said client (MS1).

3. A system using a server (S1) to distribute an application to a client (MS1) via a network, **characterized in that** said client (MS1) transmits to said server (S1) a request to download an application via a relay server and stores said application transmitted from said server (S1) in an application storage area;
said server (S1) comprising:
an application storage section (FL1) comprising a prepared module group and a link information table storing link information for linking these modules as executable objects for respective platforms;
a download request acceptance section (FR1) configured to accept a request to download said application from said client (MS1);
an application generation section (FL1) configured to determine a type of the platform based on a network address of said relay server, reference said link information table, and generate an executable object for said application; and
an application transmission section (FS1) configured to transmit the executable object generated by said application generation section (FL1) to said client (MS1).

4. A system using a server (S1) to distribute an application to a client (MS1) via a network, **characterized in that** said client (MS1) transmits to said server (S1) a request to download an application and stores the application transmitted from said server (S1) in an application storage area;
said server (S1) comprising:
an application storage section (HD1) comprising a prepared module group and a link information table storing link information for linking these modules as executable objects for respective platforms;
a download request acceptance section (FR1) having a plurality of port addresses configured to accept a request to download said application from said client (MS1);
an application generation section (FL1) configured to determine a type of the platform based on a port address having accepted said download request reference said link information table and generate an executable object for said application; and
an application transmission section (FS1) configured to transmit the executable object generated by said application generation section (FL1) to said client (MS1).

5. A system using a server (S1) to distribute an application to a client (MS1) via a network **characterized in that** said client (MS1) transmits to said server (S1) a request to download an application including a platform type for said client (MS1) and stores said application transmitted from said server (S1) in an application storage area and said application comprises a first module group executed on said client (MS1) and a second module group executed on said server (S1) in place of said client (MS1);
said server (S1) comprising:
an application storage section (HD1) comprising said first and second module groups and a link information table storing link information configured to link these modules as executable objects for respective platforms;
a download request acceptance section (FR1) configured to accept a request to download an application from said client (MS1);
an application generation section (FL1) configured to determine said platform type included in a download request accepted by said download request acceptance section (FR1), reference said link information table and generate an executable object for said application;
an application transmission section (FS1) configured to transmit the executable object generated by said application generation section (FL1) to said client (MS1); and
a substitutive execution section configured to accept a processing request from said second module group executed on said server (S1) in place of said client (MS1) during execution of an application on said client (MS1) and transmit a substitutive execution result to said client (MS1).

6. A system using a server (S1) to distribute an application to a client (MS1) via a network **characterized in that** said client (MS1) transmits to said server (S1) a request to download an application and stores the application transmitted from said server (S1) in an application storage area and said application comprises a first module group executed on said client (MS1) and a second module group executed on said server (S1) in place of said client (MS1);
said server (S1) comprising:
an application storage section (HD1) comprising said first and second module groups and a link information table storing link information for linking these modules as executable objects for respective platforms;
a download request acceptance section (FR1) configured to accept a request to download an application from said client (MS1);
an application generation section (FL1) configured to determine a type of the platform based on a network address of said client (MS1), reference said link information table, and generate an executable object for said application;
an application transmission section (FS1) configured to transmit the executable object generated by said application generation section (FL1) to said client (MS1); and
a substitutive execution section configured to accept a processing request from said second module group executed on said server (S1) in place of said client (MS1) during execution of an application on said client (MS1) and sending a substitutive execution result to said client (MS1).

7. A system using a server (S1) to distribute an application to a client (MS1) via a network **characterized in that** said client (MS1) transmits to said server (S1) a request to download an application via a relay server and stores the application transmitted from said server (S1) in an application storage area and said application comprises a first module group executed on said client (MS1) and a second module group executed on said server (S1) in place of said client (MS1);
said server (S1) comprising:
an application storage section (HD1) comprising said first and second module groups and a link information table storing link information for linking these modules as executable objects for respective platforms;
a download request acceptance section (FR1) configured to accept a request to download an application from said client (MS1);
an application generation section (FL1) configured to determine a type of the platform based on a network address of said relay server, referencing said link information table, and generating an executable object for said application;
an application transmission section (FS1) configured to transmit the executable object generated by said application generation section (FL1) to said client (MS1); and
a substitutive execution section configured to accept a processing request from said second module group executed on said server (S1) in place of said client (MS1) during execution of an application on said client (MS1) and transmit a substitutive execution result to said client (MS1).

8. A system using a server (S1) to distribute an application to a client (MS1) via a network **characterized in that** said client (MS1) transmits to said server (S1) a request to download an application and stores said application transmitted from said server (S1) in an application storage area said application comprises a first module group executed on said client (MS1) and a second module group executed on said server (S1) in place of said client (MS1);
said server (S1) comprising:
an application storage section (HD1) comprising said first and second module groups and a link information table storing link information for linking these modules as executable objects for respective platforms;
a download request acceptance section (FR1) having a plurality of port addresses configured to accept a request to download an application from said client (MS1);
an application generation section (FL1) configured to determine a type of the platform based on a port address having accepted said download request, reference said link information table and generate an executable object for said application;
an application transmission section (FS1) configured to transmit the executable object generated by said application generation section (FL1) to said client (MS1); and
a substitutive execution section configured to accept a processing request from said second module group executed on said server (S1) in place of said client (MS1) during execution of an application on said client (MS1) and transmit a substitutive execution result to said client (MS1).

9. A system using a server (S1) to distribute an application to a client (MS1) via a network **characterized in that** said client (MS1) transmits to said server (S1) a download request including a function request of said application and stores said application transmitted from said server (S1) in an application storage area said application comprises a module group including modules having the same module interface and different functions;
said server (S1) comprising:
an application storage section (HD1) comprising said module group and a link information table for linking these modules as executable objects compliant with an application function request from said client (MS1);
a download request acceptance section (FR1) configured to accept a request to download said application from said client (MS1);
an application generation section (FL1) configured to determine said application function request included in a download request accepted by said download request acceptance section (FR1), reference said link information table and generate an executable object for said application;
an application transmission section (FS1) configured to transmit the executable object generated by said application generation section (FL1) to a client (MS1).

10. A program for a computer to implement a function by which a client (MS1) transmits to a server (S1) a request to download an application including a platform type for said client (MS1) via a network and stores said application transmitted from said server (S1) in an application storage area, said function including:
a download request acceptance function configured to accept a request to download said application from said client (MS1);
an application generation function configured to determine said platform type included in an accepted download request, reference a link information table storing link information for linking a prepared module group as an executable object for each platform, and generate an executable object for said application; and
an application transmission function configured to transmit the generated executable object to said client (MS1).

11. A program for a computer to implement a function by which a client (MS1) transmits to a server (S1) a request to download an application via a network and stores said application transmitted from said server (S1) in an application storage area, said function including:
a download request acceptance function configured to accept a request to download said application from said client (MS1);
an application generation function configured to determine a type of the platform based on a network address of said client (MS1), reference a link information table storing link information for linking a prepared module group as an executable object for each platform, and generate an executable object for said application; and
an application transmission function configured to transmit the generated executable object to said client (MS1).

12. A program for a computer to implement a function by which a client (MS1) transmits to a server (S1) a request to download an application via a relay server and stores said application transmitted from said server (S1) in an application storage area, said function including:
a download request acceptance function configured to accept a request to download said application from said client (MS1);
an application generation function configured to determine a type of the platform based on a network address of said relay server, reference a link information table storing link information for linking a prepared module group as an executable object for each platform, and generate an executable object for said application; and
an application transmission function configured to transmit a generated executable object to said client (MS1).

13. A program for a computer to implement a function by which a client (MS1) transmits to a server (S1) a request to download an application via a network and stores said application transmitted from said server (S1) in an application storage area, said function including:
a download request acceptance function configured to accept a request to download said application from said client (MS1);
an application generation function configured to determine a type of the platform based on a port address having accepted said download request, reference a link information table storing link information for linking a prepared module group as an executable object for each platform, and generate an executable object for said application; and
an application transmission function configured to transmit the generated executable object to said client (MS1).

14. A program for a computer to implement a function by which a client (MS1) transmits to a server (S1) a request to download an application including a platform type for said client (MS1) and stores said application transmitted from said server (S1) in an application storage area, **characterized in that**
said application comprises a first module group executed on said client (MS1) and a second module group executed on said server (S1) in place of said client (MS1); and
said function including:
a download request acceptance function configured to accept a request to download an application from said client (MS1) ;
an application generation function configured to determine said platform type included in an accepted download request, reference a link information table storing link information for linking said first and second module groups as executable objects for each platform, and generate an executable object for said application;
an application transmission function configured to transmit the generated executable object to said client (MS1); and
a substitutive execution function configured to accept a processing request from said second module group executed on said server (S1) in place of said client (MS1) during execution of an application on said client (MS1) and transmit a substitutive execution result to said client (MS1).

15. A program for a computer to implement a function by which a client (MS1) transmits to a server (S1) a request to download an application and stores said application transmitted from said server (S1) in an application storage area, **characterized in that**
said application comprises a first module group executed on said client (MS1) and a second module group executed on said server (S1) in place of said client (MS1); and
said function including:
a download request acceptance function configured to accept a request to download an application from said client (MS1);
an application generation function configured to determine a type of the platform based on a network address of said client (MS1), reference a link information table storing link information for linking said first and second module groups as executable objects for each platform, and generate an executable object for said application;
an application transmission function configured to transmit the generated executable object to said client (MS1); and
a substitutive execution function configured to accept a processing request from said second module group executed on said server (S1) in place of said client (MS1) during execution of an application on said client (MS1) and transmit a substitutive execution result to said client (MS1).

16. A program for a computer to implement a function by which a client (MS1) transmits to a server (S1) a request to download an application via a relay server and stores said application transmitted from said server (S1) in an application storage area, **characterized in that**
said application comprises a first module group executed on said client (MS1) and a second module group executed on said server (S1) in place of said client (MS1); and
said function including:
a download request acceptance function configured to accept a request to download an application from said client (MS1);
an application generation function configured to determine a type of the platform based on a network address of said relay server, reference a link information table storing link information for linking said first and second module groups as executable objects for each platform, and generate an executable object for said application;
an application transmission function configured to transmit the generated executable object to said client (MS1); and
a substitutive execution function configured to accept a processing request from said second module group executed on said server (S1) in place of said client (MS1) during execution of an application on said client (MS1) and transmit a substitutive execution result to said client (MS1).

17. A program for a computer to implement a function by which a client (MS1) transmits to a server (S1) a request to download an application and stores said application transmitted from said server (S1) in an application storage area, **characterized in that**
said application comprises a first module group executed on said client (MS1) and a second module group executed on said server (S1) in place of said client (MS1); and
said function including:
a download request acceptance function configured to accept a request to download an application from said client (MS1) by using a plurality of port addresses;
an application generation function configured to determine a type of the platform based on a port address having accepted said download request, reference a link information table storing link information for linking said first and second module groups as executable objects for each platform, and generate an executable object for said application;
an application transmission function configured to transmit the generated executable object to said client (MS1); and
a substitutive execution function configured to accept a processing request from said second module group executed on said server (S1) in place of said client (MS1) during execution of an application on said client (MS1) and transmit a substitutive execution result to said client (MS1).

18. A program for a computer to implement a function by which a client (MS1) transmits to a server (S1) a download request including a function request of said application via a network and stores an application sent from said server (S1) in an application storage area, **characterized in that**
said application comprises a module group including modules having the same module interface and different functions; and
said function comprising:
a download request acceptance function configured to accept a request to download said application from said client (MS1);
an application generation function configured to determine an application function request included in an accepted download request, reference said link information table, and generate an executable object for said application; and
an application transmission function configured to transmit the generated executable object to a client (MS1).
